# EUROPÄISCHE PATENTSCHRIFT

(11) **EP 0 572 787 B1**
(45) Veröffentlichungstag und Bekanntmachung des Hinweises auf die Patenterteilung: **02.07.1997**
(21) Anmeldenummer: 93106440.6
(22) Anmeldetag: 21.04.1993
(51) Int. Cl.: G01M 9/04

(54) **Windkanal**
Wind tunnel
Soufflerie

(30) Priorität: 06.05.1992 DE 4214991
(43) Veröffentlichungstag der Anmeldung: 08.12.1993
(73) Patentinhaber: EUROPEAN TRANSONIC WINDTUNNEL GmbH, 51147 Köln (DE)
(72) Erfinder: Bouis, Xavier, W-5000 Köln 90 (DE)
(74) Vertreter: Selting, Günther, Dipl.-Ing.

(56) Entgegenhaltungen:
- DE-A- 2 820 439
- GB-A- 2 177 661
- US-A- 4 308 748
- AIAA AERODYNAMIC TESTING CONFERENCE Mai 1988, SAN DIEGO, US Seiten 342 - 350 J.P. ARCHAMBAUD, E.A. 'TWO-DIMENSIONAL AND THREE-DIMENSIONAL ADAPTATION AT THE T2 TRANSONIC WIND TUNNEL OF ONERA / CERT'
- NTIS TECH NOTES Juli 1988, SPRINGFIELD, VA US Seite 569 'ADAPTIVE-WALL WIND TUNNEL'

## Beschreibung

Die Erfindung betrifft einen Windkanal zum Testen von Objekten im subsonischen, transsonischen und supersonischen Geschwindigkeitsbereich.

Aerodynamische Simulation in Windkanälen wird normalerweise durch die sogenannte "Wandinterferenz" gestört. Diese ergibt sich aus der Tatsache, daß im Windkanal, im Gegensatz zu einem Flugzeug in freier Atmosphäre (oder einem beliebigen Fahrzeug in freier Umgebung), die Strömung von Wänden umgeben ist. Infolge der Präsenz solcher Windkanalwände kann entweder die gewünschte Strömungsmachzahl (Verhältnis von Geschwindigkeit zur Schallgeschwindigkeit) nicht erreicht werden und/oder das Strömungsfeld um das Testobjekt wird in negativer Weise beeinflußt, d.h. die Qualität der Simulation wird verringert.

Die Reduzierung derartiger durch die Windkanalwände verursachter Störungen und, wenn möglich, ihre theoretische Beschreibung und Berechnung gehört zu den Hauptaufgaben der Aerodynamiker. Zahlreiche Lösungsansätze sind gefunden und getestet worden, ohne jedoch bisher den Anforderungen der Windkanalspezialisten gerecht werden zu können.

Zur Reduzierung der Wandeinflüsse oder zur Ermöglichung der Berechenbarkeit dieser Einflüsse sind verschiedene Ansätze bekannt. Eine Lösung besteht darin, die Wände im Bereich der Meßstrecke des Windkanals porös zu machen, die Wände zu perforieren oder sie mit längslaufenden Schlitzen verschiedener Formen zu versehen. Alle drei Varianten bewirken, daß Teile des Haupt-Luftmassenstromes in eine Art Hohlraum um den Testbereich ausweichen können. Solche "offenen" Systeme reduzieren die Wandstörungen beträchtlich, jedoch hat sich gezeigt, daß dabei Störgeräusche erzeugt werden, welche die Qualität der Hauptströmung verringern. Erhebliche Schwierigkeiten ergeben sich auch hinsichtlich der Aufstellung von Randbedingungen für eine Berechnung der Restkorrekturen.

Eine weitere praktizierte Lösung ist, die Wände eines Windkanals insgesamt flexibel zu gestalten und sie der jeweiligen aerodynamischen Situation anzupassen. Solche Wände werden "adaptive Wände" genannt. Bei einer rechteckigen Meßstrecke ist es relativ einfach, zwei einander gegenüberliegende Wände zur Anpassung an das Testobjekt zu deformieren. Zwar würde hierdurch die Erzielung der richtigen Mach-Zahl ermöglicht, und es können auch Störungen der Hauptströmung korrigiert werden, jedoch ist es nicht möglich, die verbleibenden Spannweiteneffekte zu verringern, die an den Flügeln von Auftriebsmodellen auftreten. Die gleichzeitige Adaption durch Deformation von vier Wänden läßt sich technisch in der Praxis kaum realisieren. Darüberhinaus erfordert die Verwendung adaptiver Wände auch eine sehr hohe Positioniergenauigkeit dieser Wände bei hohen subsonischen Mach-Zahlen, die ihren Einsatz bei großen Kanälen, insbesondere unter variablen Temperaturbedingungen, aufgrund mechanischer Komplexität erheblich erschweren. Die Verwendung einer Kombination flexibler oktogonaler Wände, deren Grenzflächen aus Gleitplatten bestehen, führt zwar zu einer deutlichen Reduzierung der Wandinterferenzen, jedoch stehen massive mechanische Schwierigkeiten diesem Vorteil gegenüber. Darüberhinaus muß ihre Einsatzfähigkeit im Überschallgebiet erst noch nachgewiesen werden.

Aus der Zeitschrift "Flugwiss. Weltraumforschung 6 (1982)", Heft 6, S. 398-408 ist ein transsonischer Windkanal bekannt, dessen Wände längslaufende Schlitze aufweisen. Zur Verringerung der Wandinterferenzen sind die Schlitze auf den Innenseiten der Wände mit dünnen Aluminiumstreifen überklebt, wobei ein schmaler Spalt von 1,75 mm Breite offenbleibt. Hierbei sind individuelle Anpassungen an das Testmodell nicht möglich. Außerdem sind die dünnen Aluminiumstreifen nicht hinreichend formstabil.

Aus DE 35 24 784 C2 ist ein transsonischer Windkanal mit perforierten Wänden bekannt, bei dem hinter den Wänden Platten angeordnet sind, deren Abstand zu den Wänden verändert werden kann, um durch adaptive Einstellungen der Platten die Wandinterferenzen zu minimieren.

Aus US-A-4 308 748 ist ein Windkanal mit adaptiven Wänden bekannt, bei dem die Wände in dicht benachbarte Rinnen mit flexiblen Streifen unterteilt sind, die in Anpassung an das zu testende Windkanalmodell verstellt werden können, um die auftretenden Wandinterferenzen zu verringern. Zwischen den Streifen befinden sich längslaufende Bleche, die jeweils mit einer Kante zur Meßstrecke gerichtet sind. Diese Bleche bilden die Grenze zwischen zwei Rinnen, um zu vermeiden, daß bei unterschiedlicher Stellung zweier benachbarter Streifen offenen Stellen im Windkanal entstehen. Hinter den Streifen, die mittels Dichtungen die Meßstrecke abdichten, befinden sich Verstellvorrichtungen, mit denen der Verlauf der Streifen in Längsrichtung des Windkanals variiert werden kann. Jede Wand besteht also aus zahlreichen Streifen, Blechen und Verstellvorrichtungen, die sämtlich an einer hierfür vorgesehenen komplexen Tragstruktur befestigt werden müssen.

Der Erfindung liegt die Aufgabe zugrunde, einen Windkanal zu schaffen, der die aerodynamischen Vorzüge eines adaptiven Windkanals bietet und eine verbesserte mechanische Struktur aufweist.

Die Lösung dieser Aufgabe erfolgt erfindungsgemäß mit den im Patentanspruch 1 angegebenen Merkmalen.

Anstelle der Bewegung oder Verformung der gesamten Wände ist bei der Erfindung nur eine geringe Zahl flexibler Platten vorhanden, von denen jede den Boden einer Rinne bildet, die parallel zur Meßstrecke des Windkanals verläuft. Diese Rinnen haben feste Seitenwände, so daß die Grenzbedingungen für Strömungsberechnungen genau definiert und bekannt sind. Im übrigen ist die Windkanal-Meßstrecke bezüglich der Anzahl der Rinnen in gleicher Weise ausgebildet wie eine herkömmliche Meßstrecke mit geschlitzten Wänden. Die flexiblen Platten sind innerhalb der Kanalwände verformbar bzw. bewegbar. Der Verformungs- bzw. Bewegungsweg beträgt im Prinzip nur wenige Prozent der Breite bzw. Höhe der Meßstrecke, hängt jedoch im einzelnen von der Mach-Zahl und der Größe und Form des Modells ab. Die Rinnen müssen breit genug sein und ihre Anzahl muß hinreichend groß sein, um den erforderlichen Effekt zu erreichen. Typische Werte sind 3-6 Rinnen pro Wand, wobei die gesamte Öffnungsfläche 3%, vorzugsweise 5%, der Wandfläche übersteigt. In speziellen Situationen kann hiervon abgewichen werden, sofern das Verhältnis von Tiefe zu Breite der Rinnen nicht zu groß wird.

Für eine vollständige Kompensation der dreidimensionalen Wandeffekte sollten alle vier Wände des Windkanals mit Rinnen mit verstellbarem Boden oder Einlageplatte ausgebildet sein. Die Rinnen haben vorzugsweise rechteckigen Querschnitt, um zwischen den parallelen Seiten eine ungehinderte Bewegung der Einlageplatten zu gewährleisten.

Die flexiblen Boden/Einlageplatten der Rinnen können durch Linearantriebe und Nocken o.dgl. bewegt werden. Die zu optimierende Anzahl der Angriffspunkte für die Verstellelemente an jeder Platte liegt zwischen 1 und etwas mehr als 10. Die Positioniergenauigkeit steht im umgekehrten Verhältnis zu der Öffnungsfläche in den Wänden; sie ist also viel leichter zu erreichen als bei ganzen Wänden.

Die optimale Verbiegung der flexiblen Platten kann empirisch ermittelt oder nach speziellen Berechnungsmethoden errechnet werden. Ein einfacher Weg zur Erzielung eines guten Ergebnisses besteht darin, das sogenannte Flächengesetz des zu testenden Modells zu benutzen, um die aerodynamische Kanalverblockung zu kompensieren. Zusätzlich können Daten benutzt werden, die aus einer geeigneten Druckdifferenz oder durch den Auftrieb des Modells erhalten werden, um die Rinnen zur Kompensation der durch diesen Auftrieb erzeugten Wandinterferenzen einzustellen. Restkorrekturen können dann durch geeignete Rechenprogramme ermittelt werden, wie sie auch für den Fall geschlossener Meßstreckenwände benutzt werden.

Eine aufwendigere Methode des Positionsabgleichs der flexiblen Platten besteht darin, eines der Wandinterferenz-Rechenprogramme in einem Optimierungsprozeß zu benutzen, der auf der Minimisierung der Resteffekte bei einer um das Modell herum angeordneten Anzahl von Kontrollpunkten beruht.

Die Erfindung liefert die folgenden Vorteile:
vollständige dreidimensionale Beseitigung der Wandinterferenzen bei subsonischen Mach-Zahlen für jede Art von Modell und jede Art von Meßstreckenkonfiguration,
Möglichkeit der Berechnung der Restkorrekturen, falls erforderlich, mit Hilfe existierender mathematischer Modelle,
hohes Maß an Einstellgenauigkeit und Wiederholbarkeit der Positionierung,
geringer Energieaufwand durch geringe Energieverluste,
Reduzierung der aerodynamischen Geräuscherzeugung,
einfache, schrittweise und reversible Umrüstung zahlreicher existierender Windkanäle mit unterschiedlichen Meßstreckengeometrien,
geringe Kosten der Um- oder Nachrüstung der Windkanal-Meßstrecken im Vergleich zu anderen bereits bekannten Konzepten (z.B. adaptive Wände),
Fenster oder ähnliche Wandeinbauten im Bereich der Meßstrecke können erhalten bleiben,
während der Testläufe ist ein unmittelbarer aerodynamischer Vergleich mit festen Meßstreckenwänden zwecks Referenz möglich, indem die Rinnentiefe auf Null reduziert wird,
gute Überschallbedingungen können erzielt werden, wenn der Windkanal mit einer flexiblen Düse ausgerüstet ist (jedoch nicht in unmittelbarer Nähe von Mach 1, wegen der Stoßreflektionen am Modell).

Die Rinnen haben nicht die Aufgabe der Vermeidung von Wirbelerzeugung, sondern sie bewirken eine quasi reibungsfreie Strömung, wodurch eine Vereinfachung der theoretischen Ansätze erzielt wird. Hierzu wird zweckmäßigerweise die Rinnenkontur so eingestellt, daß sich ihr Boden vom Eintrittsende her kontinuierlich und stetig absenkt. Der Radius der Kanten, den die Rinnen mit der jeweiligen Meßstreckenwand bilden, erhöht sich von etwa 0 am Eintrittsende bis auf seinen Maximalwert, der etwa geringfügig stromauf des Testobjekts erreicht wird. Somit wirkt man der Gefahr einer Strömungsablösung entgegen. Eine weitere Verbesserung ist noch erzielbar, wenn die Wirbelbildung durch Grenzschichtabsaugung reduziert wird, beispielsweise, indem die flexiblen Platten eine geringfügige Porosität erhalten und hinter ihnen ein Unterdruck erzeugt wird. Bei konventionellen, geschlitzten Meßstrecken-Wänden wird der Unterdruck z.B. dadurch erzeugt, daß stromab der Meßstrecke angeordnete Klappen entsprechend geöffnet werden, um die sogenannte "Plenum-Absaugung" hervorzurufen. Eine derartige Porosität erzeugt, verglichen mit der Verformung der Platten, Strömungsstörungen zweiter Ordnung.

Die Erfindung ist bei subsonischen, insbesondere aber bei transsonischen Windkanälen anwendbar, die im Bereich der Schallgeschwindigkeit arbeiten, aber auch bei Überschall-Windkanälen. Die durch die Erfindung bewirkte Reduzierung der Wandeffekte auf die Strömung in der Meßstrecke wirkt sich auch bei Kryo-Kanälen aus, in denen die Gasströmung niedrige Temperaturen von z.B. -100°C bis -200°C hat.

Im folgenden werden Ausführungsbeispiele der Erfindung unter Bezugnahme auf die Zeichnungen näher erläutert.

Es zeigen:
- Fig. 1: eine schematische perspektivische Darstellung der Meßstrecke eines Windkanals,

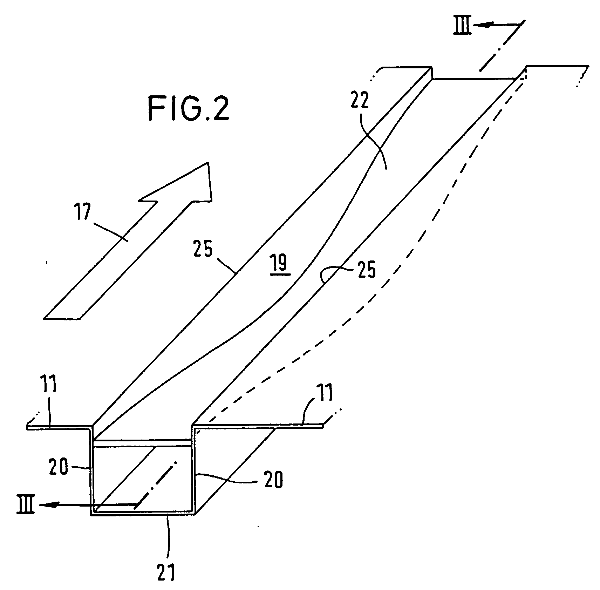

- Fig. 2: eine perspektivische Darstellung einer Rinne und des dahinter befindlichen Kanals in einer Meßstreckenwand eines Windkanals,
- Fig. 3: einen Schnitt entlang der Linie III-III von Fig. 2 und
- Fig. 4: eine perspektivische Darstellung des Rinnenrandes mit sich in Strömungsrichtung vergrößerndem Kantenradius.

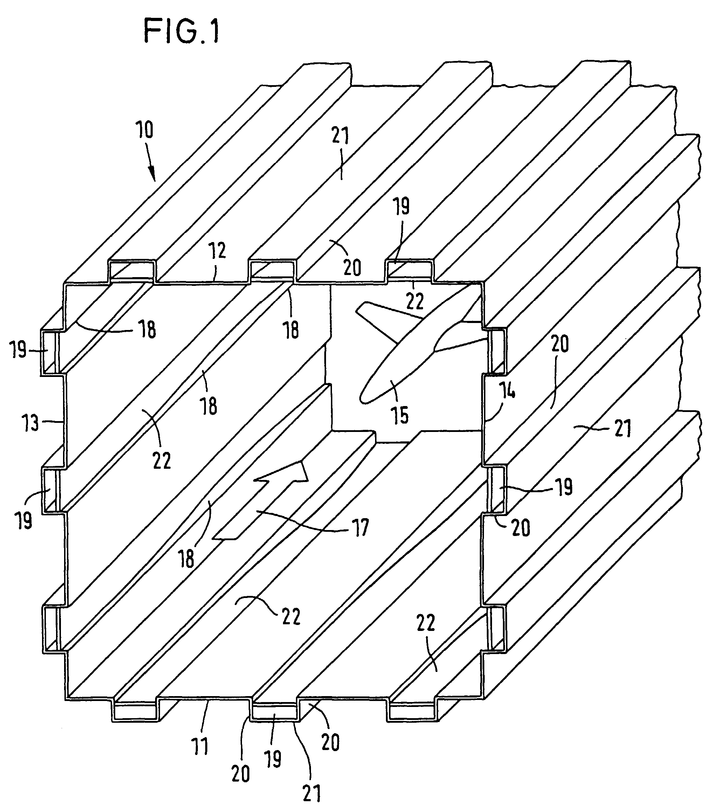

Der in Fig. 1 dargestellte Meßstreckenbereich eines Windkanals 10 ist durch vier Wände begrenzt, nämlich eine Bodenwand 11, eine Oberwand 12 und zwei Seitenwände 13 und 14. Die Wände 11 bis 14 sind bei dem vorliegenden Ausführungsbeispiel ebene Wände, die einen rechteckigen Querschnitt einschließen. In dem Windkanal 10 wird das zu testende Modell 15, z.B. ein Flugzeugmodell, mit Abstand von den Wänden fixiert. Die hierzu benötigte Haltevorrichtung ist nicht dargestellt. Die Windrichtung ist durch den Pfeil 17 bezeichnet.

Zur Verringerung der Effekte, die die Wände des Windkanals auf die Strömungsverhältnisse ausüben, sind in den Wänden 11 bis 14 längslaufende Schlitze vorgesehen, die sich über die gesamte Länge der Meßstrecke erstrecken und eine Breite von etwa 2 bis 10 cm im Fall einer Meßstreckenbreite von etwa 2,4 m haben. Bei dem dargestellten Ausführungsbeispiel sind in jeder Wand drei Schlitze 18 angeordnet.

Hinter jedem Schlitz 18 befindet sich eine U-förmige Rinne 19 mit zwei geschlossenen starren Seitenwänden 20, die durch einen starren Rinnengrund 21 verbunden sind und von den Schlitzrändern nach hinten abgehen.

In jeder der Rinnen 19 ist ein längslaufender flexibler Boden 22 angeordnet, der über dem Rinnengrund 21 verläuft und sich von einer Seitenwand 20 bis zur überliegenden Seitenwand erstreckt und somit die Rinnenbreite ausfüllt. Der Boden 22 besteht aus einem Streifen aus Blech, Kunststoff oder einem anderen flexiblen Material. Der Boden 22 ist in der Rinne 19 derart angeordnet, daß sein Abstand vom Rinnengrund 21 örtlich verändert werden kann, so daß dieser Abstand in Längsrichtung variiert.

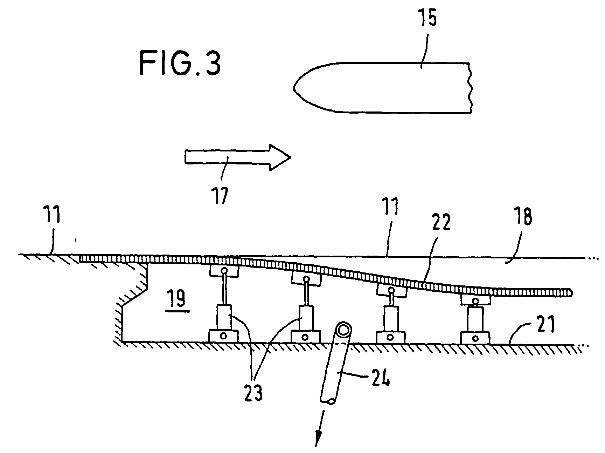

Fig. 3 zeigt eine Reihe von linearen Stellvorrichtungen 23, die jeweils am Rinnengrund 21 abgestützt sind und an der Außenseite des Bodens 22 angreifen. Jede der Stellvorrichtungen 23 kann in eine andere Position eingestellt werden, um den Abstand des Bodens 22 vom Rinnengrund 21 zu variieren. Auf diese Weise kann durch entsprechende Einstellung der Stellvorrichtungen 23 ein gewünschter Verlauf des Bodens 22 im Inneren der Rinne 19 realisiert werden. Wenn die Stellvorrichtungen 23 vollständig ausgefahren sind, liegt der Boden 22 bündig mit der betreffenden Wand der Windkanalmeßstrecke, so daß eine ebene Wandfläche gebildet wird.

Bei dem Ausführungsbeispiel der Fig. 3 besteht der Boden 22 aus einer Platte aus porösem oder perforiertem Material. Im Inneren der Rinne 19 befindet sich eine Saugvorrichtung 24, die Gas aus der Rinne absaugt. Da die Rinne an ihren beiden stirnseitigen Enden geschlossen ist, entsteht ein Sog durch den porösen Boden 22 hindurch. Dadurch wird die an der Oberfläche des Bodens 22 entstehende Grenzschicht abgesaugt.

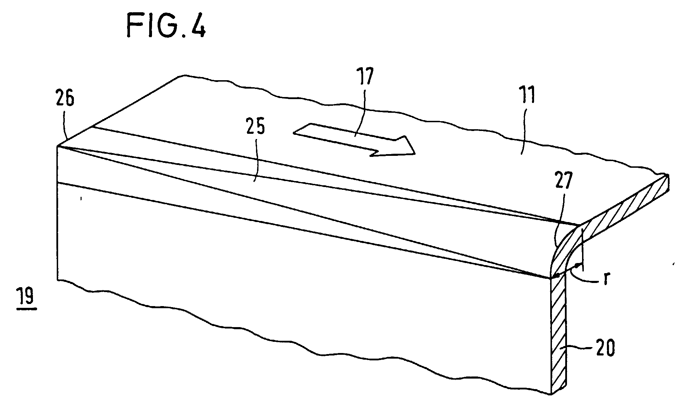

In Fig. 4 ist die Kante 25 eines Schlitzes dargestellt, also der Eckbereich zwischen einer Kanalwand 11 und der angrenzenden Seitenwand 20 einer Rinne 19. Die Kante 25 ist abgerundet, wobei ihr Abrundungsradius am stromauf liegenden Ende 26 des Testbereichs nahezu Null ist und sich in Strömungsrichtung kontinuierlich vergrößert. An einer Stelle 27 kurz vor dem Testmodell hat der Kantenradius r seinen größten Wert von etwa 10 mm, unter Zugrundelegung einer Breite der Meßstrecke von ca. 2,4m.

## Patentansprüche

1. Windkanal mit Wänden (11,12,13,14), in Längsrichtung der Wände verlaufenden Rinnen (19), die jeweils einen flexiblen Boden (22) enthalten, und mit Verstellmitteln (23) um die flexiblen Böden (22) der Rinnen (19) einzeln in variierende Formen zu bringen und festzuhalten,
**dadurch gekennzeichnet**,
daß die Wände (11,12,13,14) ebene Flächen sind, in denen Schlitze (18) vorgesehen sind, hinter denen die Rinnen (19) angeordnet sind.

2. Windkanal nach Anspruch 1, dadurch gekennzeichnet, daß die ebenen Flächen zwischen zwei Schlitzen (18) breiter sind als die Schlitze (18).

3. Windkanal nach Anspruch 1 oder 2, dadurch gekennzeichnet, daß die Ränder (25) der Schlitze (18) in Längsrichtung variierende Kantenradien haben, wobei der Kantenradius sich in mindestens einem Bereich der Schlitzlänge in Strömungsrichtung vergrößert.

4. Windkanal nach einem der Ansprüche 1 bis 3, dadurch gekennzeichnet, daß mindestens einer der flexiblen Böden (22) porös oder perforiert ist, und daß hinter diesem Boden eine Absaugung erfolgt.

5. Windkanal nach einem der Ansprüche 1 bis 4, dadurch gekennzeichnet, daß die Schlitze (18) mindestens 3% der Wandfläche einnehmen.

6. Windkanal nach einem der Ansprüche 1-5, dadurch gekennzeichnet, daß die Rinnen (19) feste Seitenwände (20) und einen festen Rinnengrund (21) aufweisen, wobei der flexible Boden (22) über dem Rinnengrund (21) angeordnet ist.

## Claims

1. A wind tunnel comprising walls (11,12,13,14), channels (19) extending in the longitudinal direction of the walls, each channel having a flexible bottom (22), and adjustment means (23) for individually varying the shapes of the flexible bottoms (22) of the channels (19) and for maintaining the shapes of the bottoms (22),
**characterized in**
that the walls (11,12,13,14) are planar surfaces having slots (18) provided therein, and that the channels (19) are arranged behind the slots (18).

2. The wind tunnel according to claim 1, characterized in that the planar surfaces between two slots (18) have a width larger than that of the slots (18).

3. The wind tunnel according to claim 1 or 2, characterized in that the edge radii of the edges (25) of the slots (18) are varying in the longitudinal direction, the edge radius increasing at least over a part of the slot length in the flow direction.

4. The wind tunnel according to any one of claims 1 to 3, characterized in that at least one of the flexible bottoms (22) is porous or perforated, and that a suction effect is generated behind said bottom.

5. The wind tunnel according to any one of claims 1 to 4, characterized in that the slots (18) occupy at least 3% of the wall area.

6. The wind tunnel according to any one of claims 1 to 5, characterized in that the channels (19) have rigid side walls (20) and a rigid channel bottom (21), the rigid bottom (22) being arranged above the channel bottom (21).

## Revendications

1. Soufflerie possédant des parois (11, 12, 13, 14), des goulottes (19) s'étendant dans le sens longitudinal des parois, lesdites goulottes (19) comportant chacune un fond flexible (22), et de moyens réglables (23) pour permettre aux fonds flexibles (22) des goulottes (19) de prendre des formes différentes et pour les maintenir en place,
caractérisée en ce que les parois (11, 12, 13, 14) sont des surfaces planes dans lesquelles sont prévues des fentes (18) derrière lesquelles sont agencées les goulottes (19).

2. Soufflerie selon la revendication 1, caractérisée en ce que les surfaces planes entre deux fentes (18) sont plus larges que les fentes (18).

3. Soufflerie selon l'une des revendications 1 ou 2, caractérisée en ce que les bords (25) des fentes (18) ont des rayons d'arête qui varient dans le sens longitudinal, le rayon d'arête augmentant dans le sens d'écoulement au moins dans un secteur de la longueur de fente.

4. Soufflerie selon l'une des revendications 1 à 3, caractérisée en ce qu'au moins un des fonds flexibles (22) est perforé ou poreux et en ce qu'une aspiration est produite derrière ce fond.

5. Soufflerie selon l'une des revendications 1 à 4, caractérisée en ce que les fentes (18) occupent au moins 3 % de la surface de la paroi.

6. Soufflerie selon l'une des revendications 1 à 5, caractérisée en ce que les goulottes (19) présentent des parois latérales (20) fixes et une base de goulotte (21) fixe, le fond flexible (22) étant agencé sur la base de goulotte (21).
